# EUROPEAN PATENT APPLICATION

(11) **EP 3 078 419 A1**
(43) Date of publication of application: **12.10.2016**
(21) Application number: 16000547.6
(22) Date of filing: 07.03.2016
(51) Int. Cl.: B01J 37/03, B01J 21/04, B01J 23/00, B01D 53/86, B01J 23/80, B01J 35/00, B01J 37/00, B01J 37/02

(54) **SUPPORTED CO-ZN SPINEL CATALYST FOR THE ABATEMENT OF NITROGEN(I) OXIDE EMISSIONS ESPECIALLY FROM NITRIC ACID PLANTS AND A METHOD FOR ITS MANUFACTURE**

(30) Priority: 13.03.2015 PL 41156215
(71) Applicant: Instytut Nowych Syntez Chemicznych, 24-110 Pulawy (PL); Uniwersytet Jagiellonski, 31-007 Krakow (PL)
(72) Inventor: Wilk, Marcin, 24-100 Pulawy (PL); Inger, Marek, 24-100 Pulawy (PL); Ruszak, Monika, 30-698 Krakow (PL); Saramok, Magdalena, 24-100 Pulawy (PL); Kowalik, Pawel, 24-100 Pulawy (PL); Antoniak-Jurak, Katarzyna, 31-419 Krakow (PL); Sojka, Zbigniew, 31-419 Krakow (PL); Kotarba, Andrzej, 30-033 Krakow (PL); Grzybek, Gabriela, 30-383 Krakow (PL); Stelmachowski, Pawel, 31-979 Krakow (PL); Gudyka, Sylwia, 35-120 Rzeszow (PL); Indyka, Paulina, 32-089 Wielka Wies (PL)

(57) **Abstract**

The subject of the present invention is a supported catalyst for the abatement of nitrogen(I) oxide especially from nitric acid plants as well as from other sources of gases emitted to atmosphere, and a method for its manufacture. The method for the preparation of the catalyst is characterised in that it contains an active phase of a spinel structure composed of cobalt oxide and zinc oxide at a weight ratio of 4-8:1 in terms of straight oxides Co₃O₄:ZnO and an alkaline promoter in the form of potassium at a weight ratio of 50-120:1 with respect to Co₃O₄, loaded on a formed support composed of α-Al₂O₃, whereas the amount of the active phase is 1-25% wt., preferably 5-20% wt. of the catalyst.

## Description

The subject of the present invention is a supported catalyst for the abatement of nitrogen(I) oxide emissions especially from nitric acid plants as well as from other sources of gases emitted to atmosphere, and a method for its manufacture.

Nitrogen(I) oxide is an unwanted by-product that arises, *inter alia,* in nitric acid plants, in a reaction of catalytic oxidation of ammonia, in the processes of oxidation of organic compounds, during combustion of fossil fuels and waste. This gas does not undergo any reactions over the entire conventional process train and, consequently, is emitted into the atmosphere together with tail gas.

The most effective technologies for the removal of nitrogen(I) oxide in nitric acid plants are processes of catalytic decomposition of nitrogen(I) oxide from nitrous gas stream in an ammonia oxidation reactor (at a temperature of 750-940°C) and in a stream of tail gas (at a temperature of 200-450°C).

Catalysts and/or methods for the manufacture of catalysts for decomposition of nitrogen(I) oxide are the subject of many patents. A part of them is intended to remove nitrogen(I) oxide from the nitrous gas stream in the ammonia oxidation reactor: for example, patent descriptions WO04096702A2 (Johnson Matthey), WO09955621 and WO0023176 (BASF), WO0202230 (Yara), WO0013789 (Hermsdorfer Institute), WO009907638 (Steinmueler), WO9964139 (Grande Paroisse), DE102004024026A1 (Heraeus) PL206340 and PL20766 (INS). Catalysts described in these patents are not used in the process of removing nitrogen(I) oxide (I) from tail gas streams, mainly due to the temperature of these gases being too low. Heating the tail gas to a temperature above 750°C creates technical problems and high costs. Therefore, it is necessary to use catalysts operating efficiently at temperatures below 450°C.

A major advantage of the application of a process for the removal of nitrogen(I) oxide from the tail gas stream is a complete lack of interference in unit operations of a production train. In addition, the less severe operating conditions of the catalyst ensure longer catalyst life compared to the high-temperature process. In case that the removal of nitrogen(I) oxide takes place by direct decomposition (without the use of reducers), the only products of decomposition are nitrogen and oxygen, which are components of the air. The main technological problem is to develop appropriately active catalytic systems, able to operate in the real process conditions at relatively low temperatures in the presence of other components of the tail gas (NOx, O₂ and H₂O).

Known from patent descriptions US7,485,276B2, WO2,001,051,182A1, WO2,000,048,715A1 and WO201,051,181A1 are methods for the simultaneous removal of nitrogen(I) oxide and NOx from tail gas in nitric acid plants. The process of removing said oxides from the gas stream is carried out in two steps, in one two-zone reactor or in two separate reactors, at 350-550°C (reaction temperature depends on, inter alia, the type of the catalyst applied) with the use of reducers (ammonia, methane, LPG-Liquefied Petroleum Gas) and zeolite-based catalysts (ZSM-5, MFI, MOR, FER, BEA) modified with iron ions.

In the patent literature, one may distinguish two essential catalyst groups: zeolite-based, supported, oxygen-based, and mixed. From a review of the state of the art in the scientific literature and patent reports it appears that a large part of the catalysts for low temperature decomposition of nitrogen(I) oxide is based on zeolites modified with a variety of metal ions. Patent specification US7,901,648B2 relates to FER, BEA, MFI zeolites modified with precious metals: Rh, Ru, Ag, Os or Ir and transition metals: Cr, Fe, Co, Ni, or Cu (eg. Co-Rh-FER, Fe-Rh-FER, Fe-Ru-MOR, Fe-Rh-BEA, Fe-Ru-ZSM-5). They have been tested in conditions similar to the actual conditions at temperatures 300-600°C.

Patent specifications US2006/0088469A1 and RU2,297,278C2 also disclose zeolite catalysts (e.g. MFI, BEA) doped with iron and one or more transition metals: Cu, Co, Ni, Mn, Cr, in the presence of which in the conditions of a pilot plant an 88-100% conversion to nitrogen(I) oxide was found in a temperature range of 350-370°C. Catalysts of that type can also be applied onto a cordierite monolith, which, for example, is presented in the patent application specification US2006/0088469A1 disclosing a Co[Fe-Al] MFI system on a 2Al₂O₃ - 5SiO2 · 2MgO support.

The temperature of nitrogen(I) oxide conversion in the presence of an iron-/cobalt-modified zeolite catalyst (e.g. Fe-ZSM-5, Co-ZSM-5) may be reduced by using additionally a reducing agent, e.g. ammonia, methane, propane, or LPG, as described in WO1,999,049,954. However, the use of the reducing agent contributes to increasing the emissions of CO₂ (main greenhouse gas).

A supported catalytic system known from patent specification WO2,011,036,320, consisting of rhodium and cerium oxide modified with one or more metal from the group Pr, La, Zr, Y, Th or Sm, applied onto a monolithic γ-Al₂O₃ support (eg. 0.2₁₎% wt. Rh/ 49.9% wt. Ce_{0,9}Pr_{0,1}Oₓ/ 49,9% wt. (γ-Al₂O₃ (x < 2)) is active at temperatures lower than 525°C. It can be applied in a process of decomposition of nitrogen(I) oxide in a stream of tail gas from nitric acid plants as well as and diesel exhaust gases.

Patent specification US6,846,471 describes a series of catalysts whose active phase is rhodium or rhodium doped with other metals (Mg, Zn, Fe, Ni) on an Al₂O₃ support that can additionally comprise Mg, Zn, Ni, Fe or Mn.

Patent specifications US6,379,640B1 and WO199,315,824 concern bimetallic supported catalysts, for example: Fe-(Co, Ni, Rh, Pa, Ir, Pt, Mn, La or Ce)/ZrO₂, intended for the decomposition of N₂O in a temperature range of 400-650°C and NiO-Co₃O₄/ZrO₂ active at 280-400°C.

Among all the above mentioned catalytic systems, intended for low temperature decomposition of nitrogen(I) oxide, of particular interest, due to their properties, activity and high stability, are catalysts containing cobalt oxide with spinel structure. This can be confirmed by numerous patents, including: a catalyst based on cobalt oxide with spinel structure, promoted with caesium (593DEL2007), a biphasic catalyst consisting of at least one cobalt oxy-compound and magnesium oxide (US 6,890,499 B2), a biphasic catalyst based on cobalt spinel, having the formula Co₃O₄ - La₁₋ₓCuₓCoO₃ (DE 19,700,490 A1),

From the scientific literature there are also known numerous descriptions of various groups of catalysts, which were studied in the decomposition reaction of nitrogen(I) oxide. Examples of such catalysts, studied in recent years, are: A zeolite catalyst Fe-Beta (meso-SiO₂), M. Rutkowska et al, Appl. Catal. (B), 146 (2014*),* a modified zeolite catalyst Fe-Beta-80°C, R. Lu et al., Asia-Pacific J. Chem. Eng., 9 (2014*),* hexaferrite Ba₂Co₂Fe₁₂O₂₂, B. Ul-Ain et al. Chin. J. Catal., 34 (2013*),* a multimetallic catalyst 0.25%Rh/50%Ce_{0.9}Pr_{0.1}O₂/γ-Al₂O₃, M. Inger et al., J. Chem. Technol. Biotechnol, 88 (2013*),* CuO/CeO₂, M. Zabilskiy et al., Appl. Catal. B, 163 (2015*),* supported catalysts consisting of rhutenium supported on clay foam, Y. Zhong et al., J. Mol. Catal., 48 (4) (2014*),* supported zeolite catalyst *Co*/*Hβ,* X Xiang-Yang et al., J. Fuel Chem. Technol., 42 (2014*), Ce_{y}BaₓNi₉ oxide catalyst,* F Zhang, Chem. Eng.J., 256 (2014*),* supported catalyst consisting of gold on a spinel-structure support, D. Zhe I) et al., J. Fuel Chem. Technol., 41(10) (2013*).*

Much attention is paid in the literature to oxide catalysts containing cobalt oxide. Known from the publications Y. Liang I) et al. Catal. Commun. 4 (2003*),* Y. Liang et al. Appl.Catal. B, 45 (2003*),* N. Russo et al., Catal. Today, 119 (2007*),* J. Zhang et al., J. Envir. Sci., 26 (2014*),* B. M. Abu-Zied et al., Chin. J. Catal., 35 (2014*),* is a positive effect of structural modification on the activity of a cobalt spinel-based catalyst. Also known from F. Zasada et al. Catal. Lett. 127 (2008*),* K. Karásková et al. Chem. Eng. J. 160 (2010*),* L. Obalová et al. Appl. Catal. B, 90 (2009*),* G. Maniak et al., Appl. Catal. B, 136-137 (2013*),* L. Obalova et al., Appl. Catal. A, 462- 463 (2013*)* is a positive effect of modifying the surface with an appropriate number of alkali metals on the activity of the catalyst. Introduction of other metal ions to the structure of the spinel also modifies the size of the specific surface area of the catalytic system and redox characteristics of cobalt sites by changing the electron-related properties of the surface of the catalyst, as described in the publication by P. Stelmachowski et al, Appl. Catal. B, 146, 105-111 (2014*).* Also known from the publication by P. Stelmachowski et al. Catal. Lett. 130 (2009*);* M. Inger et al. Przem. Chem. 12 (2009*),* is a synergistic effect of structural and surficial modifications of a catalyst and the effect of those modifications on its activity. In the publication by M. Inger et al., Catal. Today, 176 (2011*,)* there is described a method for preparing a catalyst in the form of a cobalt spinel modified with zinc and potassium ions at an optimal composition that was tested in real conditions in a pilot plant, M. Inger et al., Ind. Eng. Chem. Res., 53 (2014*).* The activity of a catalyst whose active phase is a cobalt spinel largely depends on the catalyst preparation method. Of particular importance are the methods of preparation and stabilization of the active phase, and the calcination temperature.

The following are known: a cobalt spinel-based catalyst doped with nickel and zinc ions and modified with promoters that increase its activity (K and/or Na) and facilitate the formation (Ca and/or Mg) in quantities of 0.01-5% wt. *(patent* PL213,796 B1*),* a composite catalyst consisting of cobalt oxides in quantities of 25-88.6% wt. and zinc 10.99-60% wt. as the main components, and promoters in the form of alkali metals in an amount of 0.01-5% wt. and graphite in an amount of 0,4-10% wt. (patent application *P.*393992*)* obtained in accordance with the method described in *P.*393991*.* In addition, the cobalt spinel-based active phase was loaded on a cordierite monolith, which is the subject of the patent application *P.*409311 (2014*).*

The purpose of the present invention is a supported catalyst for the abatement of nitrogen(I) oxide emissions, especially from nitric acid plants, and a method for its manufacture avoiding disadvantages of the earlier discussed catalysts, such as low mechanical strength, high concentration of the active ingredient and high manufacturing costs, as well as the necessity to use reducers at temperatures below 400°C.

The supported catalyst for the abatement of nitrogen(I) oxide emissions from nitric acid plants, according to the present invention, is characterized in that it contains an active phase with the structure of a spinel, composed of cobalt oxide and zinc oxide in ratio of 4-8:1 by weight, in terms of simple oxides of Co₃O₄ : ZnO, and an alkali promoter in the form of potassium in a ratio of 50-120:1 with respect to Co₃O₄, applied onto a formed support composed of α-Al₂O₃, whereas the amount of the active phase represents 1-25%, preferably 5-20% by weight of the catalyst.

A method for the manufacture of a supported catalyst for the abatement of nitrogen(I) oxide emissions from nitric acid plants consists in impregnation of an aluminium carrier with aqueous impregnating solution containing salts of cobalt, zinc and potassium, whereas corresponding nitrates or possibly sulphates or possibly formates are used as said salts, followed by drying, calcination of the system obtained, whereas the aluminium support is obtained by gradually adding 1 kg of aqueous solution of nitric acid with a concentration of 0.001-0.5% wt. to 1,2-1,5 kg aluminium hydroxy oxide, stirring the whole mass to obtain a paste of a homogeneous consistency, which is subjected to a process of extrusion, and the shapes obtained are dried at a temperature of 100-110°C for a minimum of 8 hours, calcining at a temperature of 1200-1600°C for a minimum of 4 hours and cooling down to ambient temperature, and then the shapes obtained, containing α-Al₂O₃, are submerged and held for one hour in a solution of salts - nitrates or sulfates or possibly formates of cobalt, zinc and potassium having a temperature of 70-95°C at a mass ratio of ingredients of 1:0.12 - 0.17:0.008-0.02, in which solution the concentration of salts is 40-50% wt., dried for a minimum of 12 hours at a temperature of 100-110°C and then calcined at 450-500°C for at least 4 hours, after cooling down possibly repeating once or more the operations of impregnation, drying and calcining, and as a result of which a finished product is obtained.

Preferably, an aqueous solution of ethane-1,2-diol or propane-1,2,3-triol is used in the preparation of said impregnating solution in a volumetric ratio in relation to the volume of water of 1:1-9.

It was found unexpectedly that, in addition to formerly known positive impact of cobalt spinel donation with zinc and alkali metals (including potassium and/or sodium), the use of α-Al₂O₃ as catalyst carrier, the method of introducing the active phase by simultaneous impregnation of the support with salts of Co, Zn, K using an aqueous solution of ethane-1,2-diol or propane-1,2,3-triol, the composition and the concentration of the impregnating solution and the calcination temperature have a beneficial effect on the activity of the supported catalyst. Moreover, these effects are largely of additive nature, which in turn allows to prepare a supported catalyst with a higher activity than previously known. Therefore, the supported catalyst described here has an original composition and method of preparation, essentially different from the methods described in Polish patent applications P.393991 and P.409311, where the catalyst was prepared by co-precipitation of a precursor and its heat treatment.

Physicochemical characterization using XRD methods, Raman spectroscopy, SEM/TEM microscopy, and XPS analysis showed that the spinel structure and desired high dispersion of nanoparticles had been maintained, and the catalyst obtained exhibited high homogeneity of composition and morphology. In addition, this system is characterized by high, significantly in excess of requirements, mechanical strength and a lower manufacturing cost.

As a result of the research carried out, it was found that the supported catalyst prepared according to the present invention is active in the decomposition reaction of nitrogen(I) oxide from the gas stream with the composition of a typical tail gas from a nitric acid plant or from other sources, said gas containing beside nitrogen(I) oxide other gaseous components such as: water vapour, other nitrogen oxides (NO, NO₂), oxygen, nitrogen, helium, argon, carbon dioxide, at a temperature of 300-500°C and allows effective reduction of nitrogen(I) oxide emissions, especially those from nitric acid plants.

The subject matter of the present invention is illustrated by the following examples:

### EXAMPLE 1

100 g of aluminium hydroxyoxide was placed in a vessel with a low speed stirrer, then aqueous solution of nitric acid with a concentration of 0.008% wt. was added portionwise, with continouos stirring, until a plastic consistency was obtained. The mass so prepared was extruded and formed into shapes, then dried at 105°C for 12 hours and calcined at a temperature of 1500°C. After cooling down, 80 g of the shapes obtained were immersed and maintained for 1 hour in an impregnation solution prepared by dissolving 100 g of cobalt(II) nitrate(V) hexahydrate, 17 g of zinc(II) nitrate(V) hexahydrate and 1 g of potassium nitrate in such an amount of water that the total final volume was 100 ml, preheated to a temperature of 80°C. Then the impregnated catalyst support was dried at 105°C for 12 hours, and afterwards calcined for 4 hours at a temperature of 450°C.

The catalyst obtained using this method contained 6.5% wt. of Co₃O₄, 1.1% wt. of ZnO and 0.2% wt. of K₂O. Phase analysis by powder diffractometry showed the presence of only the spinel phase and the α-Al₂O₃ phase in the sample. In contact with tail gas from a nitric acid plant, with the composition of 900 ppm NOx, 700 ppm N₂O, 0.60% vol. H₂O, 2.0% vol O₂, N₂ - the rest, at a temperature of 400°C a 92% decomposition of nitrogen(I) oxide was obtained.

### EXAMPLE 2

100 g of aluminium hydroxyoxide was placed in a vessel with a low speed stirrer, then aqueous solution of nitric acid with a concentration of 0.01% wt. was added portionwise, with continouos stirring, until a plastic consistency was obtained. The mass so prepared was extruded and formed into shapes, then dried at 105°C for 12 hours and then calcined for 4 hours at a temperature of 1500°C. After cooling down, 80 g of the shapes obtained were immersed and maintained for 1 hour in an impregnating solution prepared by dissolving 100 g of cobalt(II) nitrate(V) hexahydrate, 15.5 g of zinc(II) nitrate(V) hexahydrate and 1 g of potassium nitrate(V) in such an amount of aqueous solution of propane-1,2,3-triol with a ration of water to propane-1,2,3-triol such that the total final volume was 100 ml, at a temperature of 80°C. Next, the impregnated catalyst support was dried at 105°C for 16 hours, and afterwards calcined for 4 hours at a temperature of 500°C. After cooling down, the catalyst obtained was again immersed for a period of 1 hour at a temperature of 80°C in a solution prepared in the same way as before, then dried at 105°C for 16 hours, and afterwards calcined for 4 hours at a temperature of 450°C.

The catalyst obtained using this method contained 12.3% wt. of Co₃O₄, 1,9% wt. ZnO and 0.4% by weight of K₂O. Phase analysis by powder diffractometry showed the presence of only the spinel phase and the α-Al₂O₃ phase in the sample. In contact with tail gas from a nitric acid plant, with the composition of 1100 ppm NOx, 900 ppm N₂O, 0.60% vol. H₂O, 2.6% vol. O₂, N₂ - the rest, at a temperature of 400°C a 98% decomposition of nitrogen(I) oxide was obtained.

## Claims

1. A supported catalyst for the abatement of nitrogen(I) oxide emissions especially from nitric acid plants, **characterised in that** it contains an active phase with the structure of a spinel, composed of cobalt oxide and zinc oxide in the proportions of 4-8:1 by weight, in terms of simple oxides of Co304 : ZnO, and an alkali promoter in the form of potassium in the proportion of 50-120:1 with respect to Co₃O₄, loaded on a formed support composed of α-Al₂O₃, whereas the amount of the active phase represents 1-25%, preferably 5-20% by weight of the catalyst.

2. A method for the manufacture of a supported catalyst for the abatement of nitrogen(I) oxide emissions from nitric acid plants, consisting in impregnation of aluminium carrier with aqueous impregnating solution containing salts of cobalt, zinc and potassium, whereas corresponding nitrates or possibly sulfates or possibly formates are used as said salts, followed by drying, calcination of the system obtained, **characterised in that** 1 kg of aqueous solution of nitric acid with a concentration of 0.001-0.5% wt. is gradually added to 1,2-1,5 kg aluminium hydroxy oxide, the whole mass is stirred until a paste of a homogeneous consistency is obtained, then the paste obtained is subjected to a process of extrusion, and the shapes formed are dried at a temperature of 100-110°C for a minimum of 8 hours, calcined at a temperature of 1200-1600°C for a minimum of 4 hours and cooled down to ambient temperature, whereafter the shapes obtained, containing α-Al₂O₃, are submerged and held for one hour in a solution of salts - nitrates or sulphates or possibly formates of cobalt, zinc and potassium and/or sodium having a temperature of 70-95°C at a mass ratio of ingredients of 1:0.12 - 0.17:0.008-0.02, in which solution the concentration of salts is 40-50% wt., dried for a minimum of 12 hours at a temperature of 100-110°C and then calcined at 450-500°C for at least 4 hours, after cooling down possibly repeating once or more the operations of impregnation, drying and calcining, and as a result of which a final product is obtained.

3. Method according to Claim 2, **characterised in that** an aqueous solution of ethane-1,2-diol or propane-1,2,3-triol is used as the solvent in the preparation of said impregnating solution in a volumetric ratio of 1:1-9 in relation to the volume of water.

4. A method for the reduction of emissions of nitrogen(I) oxide on a layer of the supported catalyst referred to in Claim 1, **characterised in that** the reduction of emissions of nitrogen(I) oxide is performed at a temperature of 300-500°C.
